# EUROPEAN PATENT APPLICATION

(11) **EP 2 755 317 A1**
(43) Date of publication of application: **16.07.2014**
(21) Application number: 13275006.8
(22) Date of filing: 11.01.2013
(51) Int. Cl.: H02M 7/757, H02J 3/36, H02M 7/483

(54) **Voltage source converter comprising a chain-link converter**

(71) Applicant: Alstom Technology Ltd, 5400 Baden (CH)
(72) Inventor: Dyke, Kevin J., Bristol South Gloucestershire BS35 4AX (GB); Trainer, David Reginald, Derby DE24 0AQ (GB); Oates, Colin, Stafford ST17 0TL (GB)
(74) Representative: Potter Clarkson LLP

(57) **Abstract**

A voltage source converter (30) comprises:
at least two converter limbs (36), each converter limb (36) extending between first and second DC terminals (32,34) and having first and second limb portions (38,40) separated by an AC terminal (42), the first and second DC terminals (32,34) being connectable to a DC electrical network (46) and each AC terminal (42) being connectable to a AC electrical network (48), each limb portion (38,40) including at least one switching element (50);
at least one chain-link converter (52), the or each chain-link converter (52) including a plurality of series-connected modules, each module including at least one switching element and at least one energy storage device, the or each switching element and the or each energy storage device of each module combining to selectively provide a voltage source, the or each chain-link converter (52) forming a branch to interconnect two of the AC terminals (42), each limb portion (38,40) of each converter limb (36) being switchable to switch the or each corresponding chain-link converter (52) into and out of circuit with that limb portion (38,40) and thereby switch the or each corresponding chain-link converter (52) into and out of circuit with the respective DC terminal (32,34), the or each chain-link converter (52) being switchable to control the configuration of an AC voltage at each corresponding AC terminal (42); and
a control unit (54), wherein the control unit (54) coordinates the switching of the limb portions (38,40) and the or each chain-link converter (52) to cause transfer of real power between the AC and DC electrical networks (48,46).

## Description

This invention relates to a voltage source converter.

In power transmission networks alternating current (AC) power is typically converted to direct current (DC) power for transmission via overhead lines and/or under-sea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC power to DC power is also utilized in power transmission networks where it is necessary to interconnect the AC networks operating at different frequencies.

In any such power transmission network, converters are required at each interface between AC and DC power to effect the required conversion, and one such form of converter is a voltage source converter (VSC).

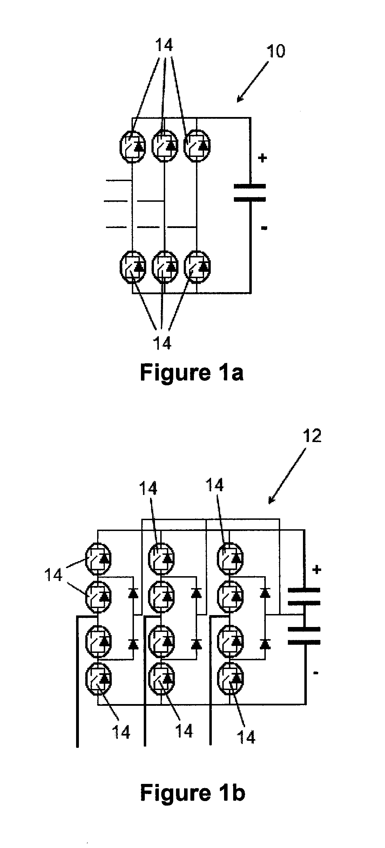

It is known in voltage source converters to use six-switch (two-level) and three-level converter topologies 10,12 with insulated gate bipolar transistors (IGBT) 14, as shown in Figures 1a and 1b. The IGBT devices 14 are connected and switched together in series to enable high power ratings of 10's to 100's of MW to be realized. In addition, the IGBT devices 14 switch on and off several times at high voltage over each cycle of the AC supply frequency to control the harmonic currents being fed to the AC network. This leads to high losses, high levels of electromagnetic interference and a complex design.

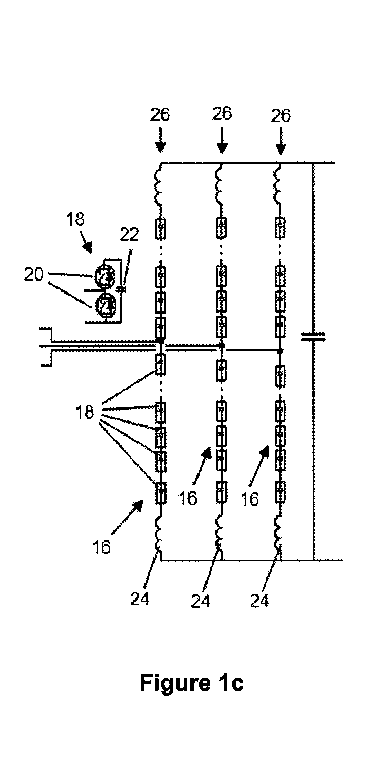

It is also known in voltage source converters to use a multi-level converter arrangement such as that shown in Figure 1c. The multi-level converter arrangement includes respective converter bridges 16 of cells 18 connected in series. Each converter cell 18 includes a pair of series-connected insulated gate bipolar transistors (IGBTs) 20 connected in parallel with a capacitor 22. The individual converter cells 18 are not switched simultaneously and the converter voltage steps are comparatively small. The capacitor 22 of each converter cell 18 is configured to have a sufficiently high capacitive value in order to constrain the voltage variation at the capacitor terminals in such a multi-level converter arrangement, and a high number of converter cells 18 are required due to the limited voltage ratings of the IGBTs 20. A DC side reactor 24 is also required in each converter bridge 16 to limit transient current flow between converter limbs 26, and thereby enable the parallel connection and operation of the converter limbs 26. These factors lead to expensive, large and heavy equipment that has significant amounts of stored energy, which makes pre-assembly, testing and transportation of the equipment difficult.

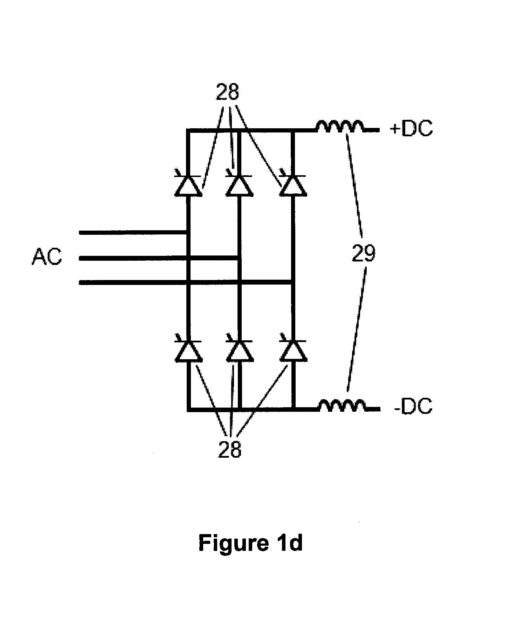

It is further known to use a line commutated converter, as shown in Figure 1d, to effect the required conversion between AC and DC power. The line commutated converter of Figure 1d consists of a plurality of thyristors 28 and inductors 29 which interconnect a three-phase AC electrical network and a DC electrical network.

According to an aspect of the invention, there is provided a voltage source converter comprising:
at least two converter limbs, each converter limb extending between first and second DC terminals and having first and second limb portions separated by an AC terminal, the first and second DC terminals being connectable to a DC electrical network and each AC terminal being connectable to a AC electrical network, each limb portion including at least one switching element;
at least one chain-link converter, the or each chain-link converter including a plurality of series-connected modules, each module including at least one switching element and at least one energy storage device, the or each switching element and the or each energy storage device of each module combining to selectively provide a voltage source, the or each chain-link converter forming a branch to interconnect two of the AC terminals, each limb portion of each converter limb being switchable to switch the or each corresponding chain-link converter into and out of circuit with that limb portion and thereby switch the or each corresponding chain-link converter into and out of circuit with the respective DC terminal, the or each chain-link converter being switchable to control the configuration of an AC voltage at each corresponding AC terminal; and
a control unit, wherein the control unit coordinates the switching of the limb portions and the or each chain-link converter to cause transfer of real power between the AC and DC electrical networks.

The coordination of the switching of the limb portions and the or each chain-link converter to cause transfer of real power between the AC and DC electrical networks enables transfer of high quality power between the AC and DC electrical networks. This is because the or each chain-link converter is capable of providing a stepped variable voltage source, which permits the generation of a voltage waveform across the or each chain-link converter using a step-wise approximation and thereby formation of a high quality AC voltage waveform at each corresponding AC terminal. In contrast, the omission of the or each chain-link converter from the voltage source converter would result in the problems described earlier with reference to the conventional voltage source converters of Figures 1a and 1b.

Such coordination of the switching of the limb portions and the or each chain-link converter permits simplification of the design and construction of the limb portions without adversely affecting the performance of the voltage source converter according to the invention. For example, each limb portion may include a single switching element or a plurality of switching elements connected in series between the corresponding AC terminal and a respective one of the DC terminals. Switching elements with high voltage ratings can be selected for use in the limb portions to further reduce the footprint of the voltage source converter and thereby minimise the real estate costs of the associated power station.

The modular arrangement of the or each chain-link converter means that it is straightforward to increase or decrease the number of modules in the or each chain-link converter to achieve a desired voltage rating of the voltage source converter.

In addition the configuration of the voltage source converter to connect the or each chain-link converter between two of the AC terminals reduces the required number of modules per converter limb and per AC phase in comparison to a conventional voltage source converter having the same number of converter limbs, each converter limb including a plurality of modules, an example of which is shown in Figure 1c. As such the reduction in the overall number of modules provides further savings in terms of the cost, size and footprint of the voltage source converter.

Furthermore the connection of the or each chain-link converter between two of the AC terminals results in combination of AC and DC currents in the or each chain-link converter during operation of the voltage source converter to transfer power between the AC and DC networks. Consequently the peak current in the or each chain-link converter is considerably reduced. This not only decreases resistive losses and thereby improves the efficiency of the or each chain-link converter, but also permits use of switching elements with lower current ratings in the or each chain-link converter.

The configuration of the voltage source converter according to the invention therefore results in an economical, space-saving voltage source converter with high voltage capabilities.

The number of converter limbs in the voltage source converter may vary to correspond to the number of phases in a multi-phase AC electrical network.

In embodiments of the invention, the voltage source converter may include three converter limbs and three chain-link converters, each chain-link converter forming a branch to interconnect two of the three AC terminals, the three branches being arranged to form a delta arrangement in which each AC terminal defines a respective junction between two of the three branches. Such configuration of the voltage source converter further reduces the peak current in the or each chain-link converter during operation of the voltage source converter to transfer power between the AC and DC electrical networks, thus permitting further optimization of the design and construction of the voltage source converter to reduce its cost, size and footprint.

Preferably the voltage source converter further includes at least one inductor. A first end of the or each inductor may be connected to the first or second DC terminal and a second end of the or each inductor may be connectable to a DC electrical network. Such connection of the or each inductor in the voltage source converter provides a current source which allows the converter limbs to be operated like a current-sourced line commutated converter, thus enhancing the operation of the or each chain-link converter.

In embodiments of the invention, the control unit may switch the or each chain-link converter to filter one or more unwanted components, e.g. harmonic content, from the AC voltage at each corresponding AC terminal. This obviates the need for separate filtering equipment which would add to the real estate costs of the associated power station.

In further embodiments of the invention, the control unit may switch the or each chain-link converter to generate a sinusoidal voltage waveform at each corresponding AC terminal. The generation of a sinusoidal voltage waveform at each AC terminal not only enables formation of a high quality AC voltage waveform at each corresponding AC terminal, but also permits soft switching of each limb portion, thus reducing switching losses.

It will be appreciated that the control unit may switch the or each chain-link converter to generate other types of voltage waveforms, preferably a voltage waveform with low non-triple N harmonic content, at each corresponding AC terminal.

In still further embodiments of the invention, the or each switching element and the or each energy storage device of each module may combine to selectively provide a bidirectional voltage source that can conduct current in two directions. In such embodiments, each module may include two pairs of switching elements connected in parallel with an energy storage device in a full-bridge arrangement to define a 4-quadrant bipolar module that can provide negative, zero or positive voltage and can conduct current in two directions.

In the voltage source converter according to the invention, each limb portion may include a single switching element or a plurality of switching elements connected in series between the corresponding AC terminal and a respective one of the DC terminals.

At least one switching element may include a naturally-commutated switching device, e.g. a thyristor or a diode. The use of at least one naturally-commutated switching device in each limb portion not only improves the robustness of the limb portions, but also makes the limb portions capable of withstanding surge currents that might occur due to faults in the DC electrical network due to their construction.

At least one switching element may include a self-commutated switching device. The self-commutated switching device may be an insulated gate bipolar transistor, a gate turn-off thyristor, a field effect transistor, an injection-enhanced gate transistor, an integrated gate commutated thyristor or any other self-commutated semiconductor device.

Optionally each limb portion may include at least one pair of switching elements connected in anti-parallel so that each limb portion can conduct current in two directions. This allows the voltage source converter to be configured to transfer power between the AC and DC electrical networks in both directions. Each switching element of the or each pair of switching elements may include a single switching device or a plurality of series and/or parallel-connected switching devices.

In the voltage source converter according to the invention, each energy storage device may be any device that is capable of storing or releasing energy, e.g. a capacitor or battery.

A preferred embodiment of the invention will now be described, by way of a non-limiting example, with reference to the accompanying drawings in which:
Figures 1a, 1b and 1c show, in schematic form, prior art voltage source converters;
Figure 1d shows, in schematic form, a prior art line commutated converter;
Figure 2a shows, in schematic form, a voltage source converter according to an embodiment of the invention;
Figure 2b shows the structure of a 4-quadrant bipolar module forming part of a chain-link converter of the voltage source converter of Figure 2a;
Figures 3 to 5 illustrate, in graph form, the operation of the voltage source converter of Figure 2a; and
Figure 6 illustrates, in graph form, a frequency analysis of an AC phase current generated at the AC terminal of the voltage source converter of Figure 2.

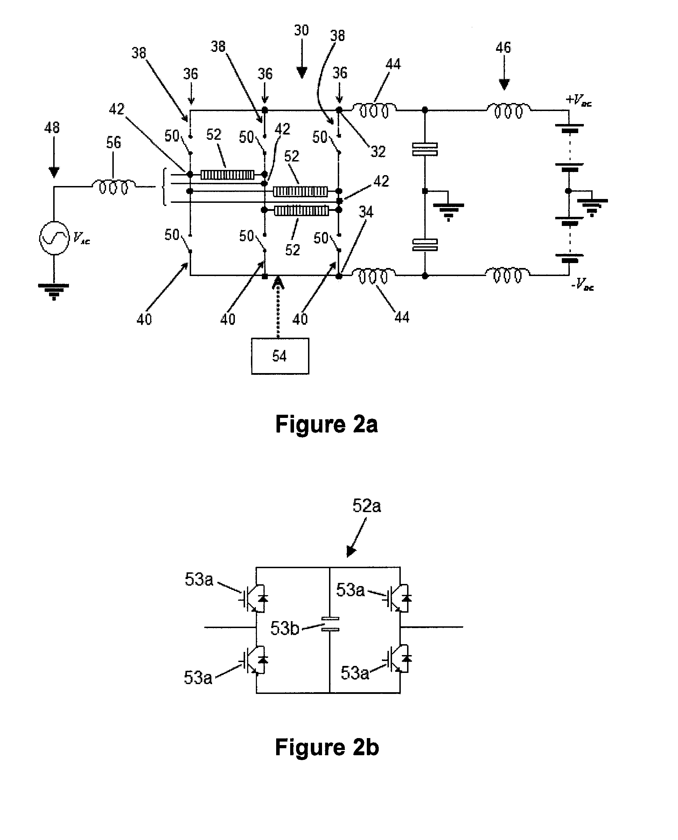

A voltage source converter 30 according to an embodiment of the invention is shown in Figure 2a.

The voltage source converter 30 comprises first and second DC terminals 32,34 and three converter limbs 36.

Each converter limb 36 extends between first and second DC terminals 32,34, and has first and second limb portions 38,40 separated by an AC terminal 42. In other words, in each converter limb 36, the first limb portion 38 is connected between the first DC terminal 32 and the AC terminal 42, and the second limb portion 40 is connected between the second DC terminal 34 and the AC terminal 42.

The voltage source converter 30 further includes two inductors 44. A first end of each inductor 44 is connected to a respective one of the first and second DC terminals 32,34.

In use, the second ends of the inductors 44 are respectively connected to positive and negative terminals of a DC electrical network 46, and each AC terminal 42 is connected to a respective phase of a three-phase AC electrical network 48 via a transformer. In this manner each inductor 44 provides a current source.

Each limb portion 38,40 includes a director switch 50, which includes a single switching element. Each switching element includes a thyristor. The use of thyristors in the limb portions 38,40 not only improves the robustness of the limb portions 38,40, but also makes the limb portions 38,40 capable of withstanding surge currents that might occur due to faults in the DC electrical network 46.

It is envisaged that, in other embodiments of the invention, each thyristor may be replaced by an insulated gate bipolar transistor, a diode, a gate turn-off thyristor, a field effect transistor, an injection-enhanced gate transistor, an integrated gate commutated thyristor or any other naturally- or self-commutated semiconductor device.

It is further envisaged that, in other embodiments of the invention, each switching element may be replaced by a plurality of series-connected switching elements to increase the voltage rating of each limb portion 38,40.

The voltage source converter 30 further includes three chain-link converters 52. Each chain-link converter 52 forms a branch to interconnect two of the three AC terminals 42 such that the three branches are arranged to form a delta arrangement in which each AC terminal 42 defines a respective junction between two of the three branches.

The connection of each chain-link converter 52 between two of the AC terminals 42 means that, in use, each limb portion 38,40 of each converter limb 36 is switchable to switch each corresponding chain-link converter 52 into and out of circuit with that limb portion 38,40 and thereby switch each corresponding chain-link converter 52 into and out of circuit with the respective DC terminal 32,34.

Each chain-link converter 52 includes a plurality of series-connected modules 52a. Each module 52a includes two pairs of switching elements, each of which is referred to hereon as a "module switch 53a", and an energy storage device in the form of a capacitor 53b, as shown in Figure 2b. The module switches 53a are connected in parallel with the capacitor 53b in a full-bridge arrangement to define a 4-quadrant bipolar module that can provide negative, zero or positive voltage and can conduct current in two directions. Each module switch 53a is constituted by a semiconductor device in the form of an Insulated Gate Bipolar Transistor (IGBT). Each IGBT is connected in parallel with an anti-parallel diode. It is envisaged that, in other embodiments of the invention, each module switch may be a different switching device such as a gate turn-off thyristor, a field effect transistor, an injection-enhanced gate transistor, an integrated gate commutated thyristor or any other self-commutated semiconductor device.

It is envisaged that, in other embodiments of the invention, the capacitor 53b may be replaced by another energy storage device that is capable of storing or releasing energy, e.g. a battery.

The capacitor 53b of each module 52a is selectively bypassed or inserted into the corresponding chain-link converter 52 by changing the state of the module switches 53a. This selectively directs current through the capacitor 53b or causes current to bypass the capacitor 53b, so that each module 52a provides a negative, zero or positive voltage.

The capacitor 53b of each module 52a is bypassed when the pairs of module switches 53a in each module 52a are configured to form a short circuit in the module 52a. This causes current in the chain-link converter 52 to pass through the short circuit and bypass the capacitor 53b, and so the module 52a provides a zero voltage, i.e. the module 52a is configured in a bypassed mode.

The capacitor 53b of each module 52a is inserted into the chain-link converter 52 when the pairs of module switches 53a in each module 52a are configured to allow the current in the chain-link converter 52 to flow into and out of the capacitor 53b. The capacitor 53b then charges or discharges its stored energy so as to provide a non-zero voltage, i.e. the module 52a is configured in a non-bypassed mode. The full-bridge arrangement of the module switches 53a of each module permits configuration of the module switches 53a to cause current to flow into and out of the capacitor 53b in either direction, and so each module 52a can be configured to provide a negative or positive voltage in the non-bypassed mode.

It is possible to build up a combined voltage across each chain-link converter 52, which is higher than the voltage available from each of its individual modules 52a, via the insertion of the capacitors 53b of multiple modules 52a, each providing its own voltage, into each chain-link converter 52. In this manner switching of the module switches 53a of each module 52a causes each chain-link converter 52 to provide a stepped variable voltage source, which permits the generation of a voltage waveform across each chain-link converter 52 using a step-wise approximation. Such switching of each module 52a can be carried out to control the configuration of the AC voltage at each corresponding AC terminal 42.

The voltage source converter 30 further includes a control unit 54 to coordinate the switching of the limb portions 38,40 and the chain-link converters 52.

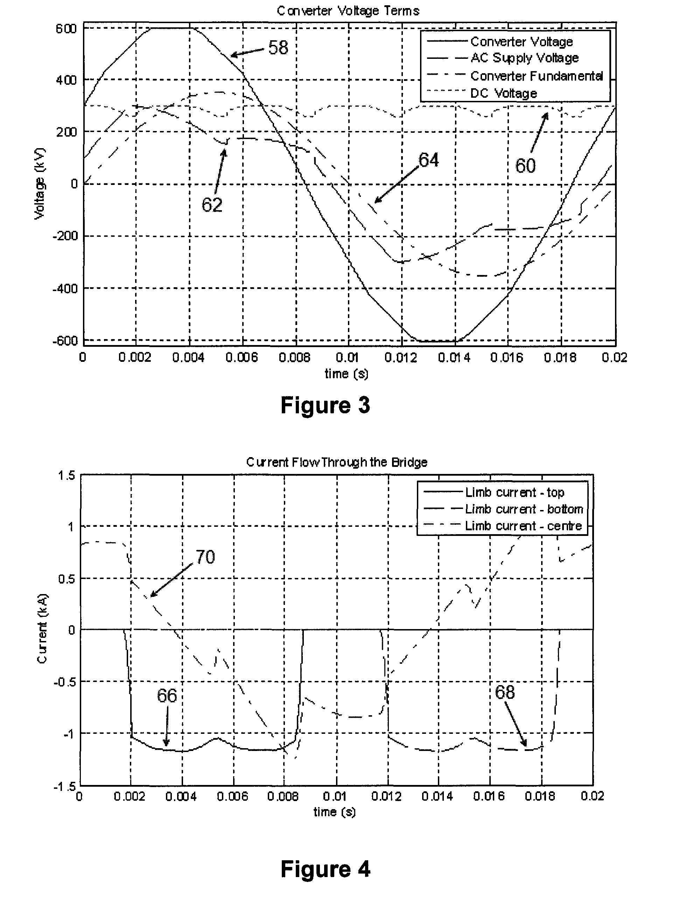

Operation of the voltage source converter 30 of Figure 2a is described as follows with reference to Figures 3 to 5.

The control unit 54 switches each chain-link converter 52 to provide a stepped variable voltage source, as set out above, so as to generate a sinusoidal voltage waveform at each corresponding AC terminal 42 with reference to a supply voltage of the AC electrical network 48 through the transformer reactance 56. Each sinusoidal voltage waveform is separated by 120 electrical degrees from the other two sinusoidal voltage waveforms. The characteristics of each sinusoidal voltage waveform is configured to allow the corresponding chain-link converter 52 to draw a required amount of current to achieve a desired level of power exchange with the AC electrical network 48.

It will be appreciated that, under real grid conditions, the aforementioned manner in which each chain-link converter 52 generates a sinusoidal voltage waveform at each corresponding AC terminal 42 could cause an unwanted variation in the AC voltage at each AC terminal 42, and so the operation of the voltage source converter 30 may employ the use of a transformer with a tap changer to compensate for any unwanted variation in the AC voltage at each AC terminal 42.

The inclusion of the inductors 44 in the voltage source converter 30 allows the converter limbs 36 to be operated like a current-sourced line commutated converter, a conventional example of which is shown in Figure 1 d. The control unit 54 switches the director switches 50 to turn on and off in the same manner as the switches of a conventional three-phase line commutated converter that is carrying out rectification of a three-phase AC voltage to a DC voltage. This causes commutation to occur for π/3 radians of the power cycle in each director switch 50, whereby a director switch 50 in a conducting state undergoes an instantaneous changeover to a non-conducting state after π/6 radians of the power cycle.

The director switches 50 are switched in a phase-controlled manner in coordination with the switching of the chain-link converters 52 to control the exchange of power between the chain-link converters 52 and the converter limbs 36. Such switching of the director switches 50 and the chain-link converters 52 is also controlled to minimise any net variation in capacitor voltage level of each module 52a in each chain-link converter 52.

The generation of a sinusoidal voltage waveform at each AC terminal 42 enables soft-switching of the limb portions 38,40, thus reducing switching losses.

Figure 3 compares an AC phase voltage 58 generated at an AC terminal 42 by one of the chain-link converters 52 of the voltage source converter 30 of Figure 2a against the DC voltage 60 of the DC electrical network 46, the AC voltage 62 of the AC electrical network 48 and a fundamental AC voltage waveform 64.

It is seen from Figure 3 that, whilst a significant level of harmonics is present in the AC voltage 62 of the AC electrical network 48, the chain-link converter 52 is nonetheless able to generate a high quality AC phase voltage 58 in the form of a sinusoidal voltage waveform at the AC terminal 42.

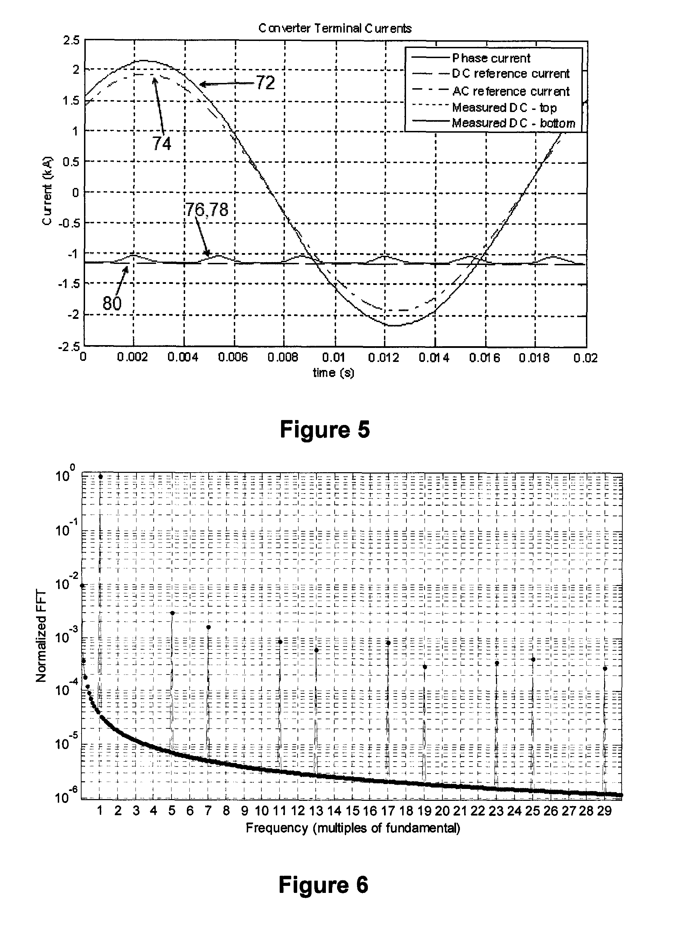

Figure 4 illustrates the variation in current 66,68 in each limb portion 38,40 of one of the converter limbs 36 of the voltage source converter 30 of Figure 2a and the variation in current 70 in the corresponding chain-link converter 52. Figure 5 compares the corresponding, measured AC phase current 72 against a AC reference current 74 and the corresponding, measured DC currents 76,78 against a DC reference current 80.

It is seen from Figures 4 and 5 that the peak of the current 70 in the chain-link converter 52 is approximately 1.3 kA while the peak of the corresponding AC phase current 72 is above 2 kA. This is because the delta arrangement of the chain-link converters 52 results in combination of AC and DC currents in each chain-link converter 52 during operation of the voltage source converter 30 to transfer power from the AC electrical network 48 to the DC electrical network 46. This has the effect of reducing the peak current in each chain-link converter 52.

It is also seen from Figure 5 that the operation of the voltage source converter 30 results in formation of a high quality, sinusoidal AC phase current 72.

Figure 6 illustrates, in graph form, a frequency analysis of an AC phase current generated at the AC terminal of the voltage source converter 30 of Figure 2a. The low order of harmonics in the AC phase current indicates the high level of purity of the AC phase current.

The configuration of the voltage source converter 30 of Figure 2a therefore enables its operation to transfer high quality power from the AC electrical network 48 to the DC electrical network 46 through coordination of the switching of the limb portions 38,40 and the chain-link converters 52 to cause transfer of real power from the AC electrical network 48 to the DC electrical network 46, with minimal filtering requirements. In contrast, as mentioned earlier, the omission of each chain-link converter 52 from the voltage source converter 30 would result in the problems described earlier with reference to the conventional voltage source converter of Figures 1a and 1b.

Such coordination of the switching of the limb portions 38,40 and the chain-link converters 52 permits simplification of the design and construction of the limb portions 38,40 without adversely affecting the performance of the voltage source converter 30. Also, switching elements with high voltage ratings can be selected for use in the limb portions 38,40 to further reduce the footprint of the voltage source converter 30 and thereby minimise the real estate costs of the associated power station.

The modular arrangement of each chain-link converter 52 means that it is straightforward to increase or decrease the number of modules 52a in each chain-link converter 52 to achieve a desired voltage rating of the voltage source converter 30.

In addition the configuration of the voltage source converter 30 to connect each chain-link converter 52 between two of the AC terminals 42 reduces the required number of modules 52a per converter limb 36 and per AC phase in comparison to a conventional voltage source converter having the same number of converter limbs, each converter limb including a plurality of modules, an example of which is shown in Figure 1c. As such the reduction in the overall number of modules 52a provides further savings in terms of the cost, size and footprint of the voltage source converter 30.

Furthermore the reduced peak current in each chain-link converter 52 not only decreases resistive losses and thereby improves the efficiency of each chain-link converter 52, but also permits use of switching elements with lower current ratings in each chain-link converter 52. Also, the reduced peak current in each chain-link converter 52 reduces the net variation in capacitor voltage level of each of its modules 52a during the operation of the voltage source converter 30, thus improving the reliability of the chain-link converters 52 and therefore the voltage source converter 30.

The configuration of the voltage source converter 30 of Figure 2a therefore results in an economical, space-saving voltage source converter 30 with high voltage capabilities.

It will be appreciated that the control unit 54 may switch each chain-link converter 52 to generate other types of voltage waveforms, preferably a voltage waveform with low non-triple N harmonic content, at each corresponding AC terminal 42.

Optionally each switching element may be connected in the opposite direction to enable the voltage source converter to transfer power from the DC electrical network to the AC electrical network. In such a configuration, the control unit may switch the director switches to turn on and off in the same manner as the switches of a conventional three-phase line commutated converter that is carrying out inversion of a DC voltage to a three-phase AC voltage.

Further optionally each switching element may be replaced by a pair of switching elements connected in anti-parallel to form a bidirectional director switch so that each limb portion can conduct current in two directions. This allows the voltage source converter to be configured to transfer power between the AC and DC electrical networks in both directions. Each switching element of the pair of switching elements may include a single thyristor or a plurality of series and/or parallel-connected thyristors.

## Claims

1. A voltage source converter comprising:
at least two converter limbs, each converter limb extending between first and second DC terminals and having first and second limb portions separated by an AC terminal, the first and second DC terminals being connectable to a DC electrical network and each AC terminal being connectable to a AC electrical network, each limb portion including at least one switching element;
at least one chain-link converter, the or each chain-link converter including a plurality of series-connected modules, each module including at least one switching element and at least one energy storage device, the or each switching element and the or each energy storage device of each module combining to selectively provide a voltage source, the or each chain-link converter forming a branch to interconnect two of the AC terminals, each limb portion of each converter limb being switchable to switch the or each corresponding chain-link converter into and out of circuit with each of the limb portions and thereby switch the or each corresponding chain-link converter into and out of circuit with the respective DC terminal, the or each chain-link converter being switchable to control the configuration of an AC voltage at each corresponding AC terminal; and
a control unit, wherein the control unit coordinates the switching of the limb portions and the or each chain-link converter to cause transfer of real power between the AC and DC electrical networks.

2. A voltage source converter according to Claim 1 including three converter limbs and three chain-link converters, each chain-link converter forming a branch to interconnect two of the three AC terminals, the three branches being arranged to form a delta arrangement in which each AC terminal defines a respective junction between two of the three branches.

3. A voltage source converter according to any preceding claim further including at least one inductor, wherein a first end of the or each inductor is connected to the first or second DC terminal and a second end of the or each inductor is connectable to a DC electrical network.

4. A voltage source converter according to any preceding claim wherein the control unit switches the or each chain-link converter to filter one or more unwanted components from the AC voltage at each corresponding AC terminal.

5. A voltage source converter according to any preceding claim wherein the control unit switches the or each chain-link converter to generate a sinusoidal voltage waveform at each corresponding AC terminal.

6. A voltage source converter according to any preceding claim wherein the or each switching element and the or each energy storage device of each module combine to selectively provide a bidirectional voltage source that can conduct current in two directions.

7. A voltage source converter according to Claim 6 wherein at least one module includes two pairs of switching elements connected in parallel with an energy storage device in a full-bridge arrangement to define a 4-quadrant bipolar module that can provide negative, zero or positive voltage and can conduct current in two directions.

8. A voltage source converter according to any preceding claim wherein each limb portion includes a single switching element or a plurality of switching elements connected in series between the corresponding AC terminal and a respective one of the DC terminals.

9. A voltage source converter according to any preceding claim wherein at least one switching element includes a naturally-commutated or self-commutated switching device.

10. A voltage source converter according to any preceding claim wherein each limb portion includes at least one pair of switching elements connected in anti-parallel so that each limb portion can conduct current in two directions.
